# EUROPEAN PATENT SPECIFICATION

(11) **EP 0 771 679 B1**
(45) Date of publication and mention of the grant of the patent: **13.06.2001**
(21) Application number: 96115849.0
(22) Date of filing: 02.10.1996
(51) Int. Cl.: B60H 1/00, H04L 12/403

(54) **Automotive air conditioning system with self-diagnosable function**
Auto-Klimaanlage mit Selbstdiagnosefunktion
Système de conditionnement d'air pour automobiles avec fonction autodiagnostique

(30) Priority: 03.10.1995 JP 25658895
(43) Date of publication of application: 07.05.1997
(73) Proprietor: Calsonic Kansei Corporation, Tokyo (JP)
(72) Inventor: Ureshino, Hiroyuki, Nakano-ku, Tokyo 164 (JP)
(74) Representative: Grünecker, Kinkeldey, Stockmair & Schwanhäusser Anwaltssozietät

(56) References cited:
- GB-A- 2 287 622
- US-A- 4 688 389
- US-A- 4 712 173
- US-A- 4 819 715
- US-A- 5 440 486
- PATENT ABSTRACTS OF JAPAN vol. 13, no. 484 (M-886), 2 November 1989 & JP 01 190520 A (DIESEL KIKI CO LTD), 31 July 1989,

## Description

### BACKGROUND OF THE INVENTION

### 1. Field of the Invention

The present invention relates in general to automotive air conditioning systems including a plurality of identical actuators for driving control doors, and more particularly to the automotive air conditioning systems of a type having a self-diagnosable function.

### 2. Description of the Prior Art

Hitherto, for simplification of harness arrangement and reducing the cost, there have been proposed automotive air conditioning systems of an actuator type in which PBR (potentio-balance-resistor) type actuators are used for driving control doors and all of the actuators are integrally controlled by a control unit (viz., AUTO AMP) by means of a serial communication using a single communication cable. Each actuator has an "IC" installed therein and the PBR detects the current angular position of the control door. In the conventional system of the actuator type, the control unit feeds each actuator with a target position signal which represents a target angular position of the corresponding control door. Upon receiving this signal, the actuator moves the control door to the target angular position with reference to the current position signal issued from the PBR.

That is, in the conventional system, the current position signal from the PBR is processed by only the actuator. In other words, the current position signal is not fed back to the control unit. Thus, hitherto, in the conventional system of such actuator type, operation check for the control door or doors by means of a self-diagnosis has not been carried out.

GB-A- 2 287 622 according to the pre-characterizing part of claim 1 discloses an automotive air conditioning system where an air mixing door is provided which is actuated by means of an actuator. An electric motor drives the air mixing door and a position detector issues a current position signal representative of a current angular position of the air mixing door. A control circuit is provided that controls the electric motor and thus the angular position of the air mixing door under consideration of the current position signal and a target position signal. A control unit controls said actuator by means of a bi-directional transmission method wherein said control unit issues respective target position signals to said actuator.

### SUMMARY OF THE INVENTION

It is therefore an object of the present invention to provide an automotive air conditioning system of an actuator type, which has a self-diagnosable function for checking or diagnosing operation of the control door or doors.

This object is solved by the features of claim 1.

Further embodiments are claimed in the sub-claims.

### BRIEF DESCRIPTION OF THE DRAWINGS

Other objects and advantages of the present invention will become apparent from the following description when taken in conjunction with the accompanying drawings, in which:
Fig. 1 is a diagrammatic view of automotive air conditioning system according to the present invention;
Fig. 2 is a view showing the construction of a communication signal used in the invention;
Fig. 3 is a front view of a control panel;
Fig. 4 is a table showing the relationship between indicating numerals and abnormal conditions of various control doors; and
Fig. 5 is a flowchart showing first, second, third and fourth general operation steps of a self-diagnosis program executed in a control unit;
Fig. 6 is a flowchart showing the detail of the first general operation step of Fig. 5, which is executed for checking the positions of mode control doors;
Fig. 7 is a flowchart showing-the detail of the second general operation step of Fig. 5, which is executed for checking the position of an air mix door; and
Fig. 8 is a flowchart showing the detail of the third general operation step of Fig. 5, which is executed for checking the position of an intake door.

### DETAILED DESCRIPTION OF THE INVENTION

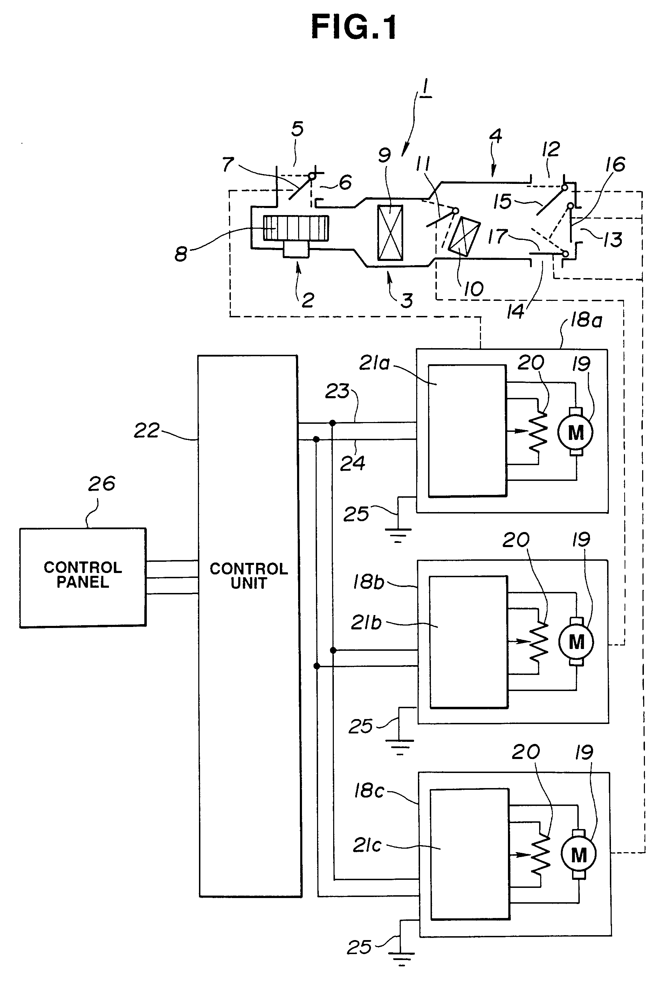

Referring to Fig. 1, there is schematically shown an automotive air conditioning system according to the present invention.

The system comprises a heater/cooler unit 1 which is conventional in construction.

The heater/cooler unit 1 generally comprises an intake unit 2, a cooling unit 3 and a heater unit 4.

The intake unit 2 includes an outside air inlet opening 5 and an inside air inlet opening 6 which are selectively controlled by an air intake door 7. That is, by the air intake door 7, the rate between the outside air amount and inside side amount is controlled. A fan 8 is arranged at a position downstream of the air intake door 7. The air intake door 7 is arranged to take for example three positions, which are an "OUTSIDE AIR INTAKE POSITION" wherein the outside air inlet opening 5 is fully opened (viz., the inside air inlet opening 6 is fully closed), an "INSIDE AIR INTAKE POSITION" wherein the inside air inlet opening 6 is fully opened (viz., the outside air inlet opening 5 is fully closed) and a "MIXED AIR INTAKE POSITION" wherein both the outside and inside air inlet openings 5 and 6 are partially opened for introducing 80% of inside air and 20% of outside air.

The cooling unit 3 has an evaporator 9 installed therein. That is, air discharged from the intake unit 2 is cooled by the evaporator 9 and led to the heater unit 4.

The heater unit 4 has at an upstream portion thereof a heater core 10 in and through which a heated water from a water jacket of an internal combustion engine (not shown) flows. An air mix door 11 is pivotally arranged at a position just upstream of the heater core 10. That is, due to provision of the air mix door 11, there are defined two air flow passages, one being a passage which extends from the evaporator 9 directly to a downstream portion of the heater unit 4 bypassing the heater core 10, and the other being a passage which extends from the evaporator 9 and passes through the heater core 10 before reaching the downstream portion of the heater unit 4. Thus, at the downstream portion, cooled air and heated air are mixed. By changing the angular position of the air mix door 11, the rate between the cooled air amount and the heated air amount at the downstream portion is controlled. With this, the temperature of air blown to a passenger room of an associated motor vehicle is controlled. That is, the mixed air thus adjusted in temperature in the downstream portion of the heater unit 4 is blown to given portions of the passenger room from various discharge openings through respective ducts.

In the illustrated example, the downstream portion of the heater unit 4 has three outlet openings, which are a defroster opening 12 from which conditioned air to be blown to an inner surface of a windshield (not shown) is discharged, a ventilation opening 13 from which conditioned air to be blown to an upper portion of the passenger room is discharged and a foot space opening 14 from which conditioned air to be blown to a lower portion of the passenger room is discharged.

These three outlet openings 12, 13 and 14 are provided with a defroster door 15, a ventilation door 16 and a foot space door 17, respectively, as shown. In general, these doors 15, 16 and 17 are called "mode doors". That is, by changing the angular position of the doors 15, 16 and 17, the open degree of the outlet openings 12, 13 and 14 is changed thereby providing various air discharge modes. In the illustrated example, such discharge modes include a VENT mode wherein conditioned air is discharged through only the ventilation opening 13, a V/F mode wherein conditioned air is discharged through both the ventilation opening 13 and the foot space opening 14, a FOOT mode wherein conditioned air is discharged through only the foot space opening 14, a D/F mode wherein conditioned air is discharged through both the defroster opening 12 and the foot space opening 14, and a DEF mode wherein conditioned air is discharged through only the defroster opening 12.

The control doors 7, 11, 15 to 17 are controlled by three actuators 18a, 18b and 18c through links. That is, the intake door 7 is actuated by an intake door actuator 18a, the air mix door 11 is actuated by an air mix door actuator 18b and the mode doors 15 to 17 are all actuated by a mode door actuator 18c.

The actuators 18a, 18b and 18c are identical in type. That is, these actuators 18a, 18b and 18c are of a so-called PBR (potentio-balance-resistor) type motor actuator which comprises an electric motor 19 for driving the door or doors, a PBR 20 for detecting the current angular position of door or doors, and a control circuit (viz., an integrated circuit including a custom IC) 21a, 21b or 21c. That is, the PBR 20 constitutes a door position detecting means and the control circuit 21 constitutes a control means. The PBR 20 is a variable resistor whose contact point moves together with a drive shaft (not shown) of the actuator 18a, 18b or 18c to output a voltage which represents, by terms of the rotation position of the motor 19, the angular position of the corresponding door or doors. As shown, the motor 19 and the PBR 20 are connected to the corresponding control circuit 21a, 21b or 21c.

The control circuit 21a, 21b or 21c has a microcomputer installed therein, which communicates with an after-mentioned control unit 22 to judge, based on target position signals applied thereto and the voltage output from the PBR 20, whether the motor 19 should be run in normal direction, in reversed direction or stopped. In accordance with this judgment, the motor 19 is operated or stopped. That is, the control circuit 21a, 21b or 21c has three functions, which are a function to communicate with an external element, a function to produce a control signal for the motor 19 and a function to output a drive signal for the motor 19. With these functions of the control circuit 21, each actuator 18a, 18b or 18c per se can stop the motor 19. The control circuit 21 is mounted on a printed circuit board (not shown) installed in the actuator 18a, 18b or 18c.

The actuators 18a, 18b and 18c are integrally controlled by a control unit 22 which has a microcomputer installed therein. That is, the control unit 22 constitutes control means. The actuators 18a, 18b and 18c are connected to the control unit 22 through one power wire 23 and one communication wire 24. More specifically, from the control unit 22, there extend only two wires 23 and 24, which are connected to the three actuators 18a, 18b and 18c in a parallel manner. Each actuator 18a, 18b or 18c has an earth wire 25 grounded. Thus, each actuator 18a, 18b or 18c has one power wire 23, one communication wire 24 and one earth wire 25 connected thereto. Thus, the number of the wire harness between the control unit 22 and the three actuators 18a, 18b and 18c is only nine, which number is quite small as compared with that of the wire harness employed in a conventional control system.

That is, in the invention, the bi-directional flow of communication signals between the control unit 22 and each actuator 18a, 18b or 18c is carried out by only the communication wire 24. For this communication, a so-called serial transmission is employed. That is, in the present invention, each actuator 18a, 18b or 18c is controlled by the control unit 22 by means of the serial transmission.

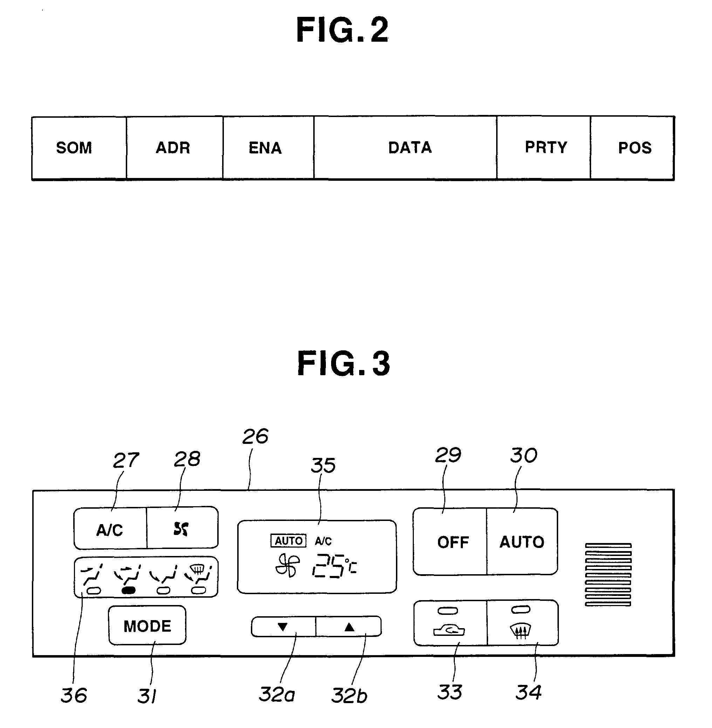

The serial signal used in the serial transmission has such a construction as shown in Fig. 2. Designated by SOM (Start of Message) is a part of 8/3 bits, which represents the starting of transmission. Designated by ADR (Address) is a part of 3 bits, which represents the address of each actuator 18a, 18b or 18c. That is, since, in the present invention, instruction signals are applied to all of the actuators 18a, 18b and 18c from the control unit 22 at the same time, such ADR signal is used for distinguishing the communication signals. Designated by ENA (Enable) is a part of 1 bit, which represents whether the motor should be run on or not. With this part, the motor can be enforcedly stopped in an abnormal condition. Designated by DATA (Data) is a part of 7 bits, which represents various information for controlling the actuators 18a, 18b and 18c, that is, signals which represent target angular positions of the doors.
Designated by PRTY (Parity) is a part of 1 bit, which represents odd parity for ADR, ENA and DATA. That is, when odd, it is judged that the communication of ADR, ENA or DATA is normal, while when even, it is judged that the communication is abnormal. The above-mentioned parts SOM, ADR, ENA, DATA and PRTY are signals which are to be transmitted-from the control unit 22 to the actuators 18a, 18b and 18c. Designated by POS (Motor posit-ion) is a part of 1 bit, which is a signal to be transmitted from the actuators 18a, 18b and 18c to the control unit 22, that is, the signal representing whether the door has assumed the target angular position or not. That is, for example, if the door has assumed the target angular position, the POS is represented by "0", while, if the door has not assumed the target position yet, the POS is represented by "1".

As is mentioned hereinabove, the serial signal which is carried by the communication wire 24 comprises a first communication part which consists of the actuator identification signal (ADR), the motor ON/OFF signal (ENA), the target position signal (DATA) and the abnormal detecting signal (PRTY), and a second communication part which consists of the target position accomplishment signal (POS). The first communication part constitutes the signals which are transmitted from the control unit 22 to each actuator 18a, 18b or 18c, and the second communication part constitutes the signals which are transmitted from each actuator 18a, 18b or 18c to the control unit 22.

In Fig. 3, there is shown a control panel 26 which has mounted thereon a plurality of switches and a plurality of display devices, which are connected to the control unit 22. As shown, on the control panel 26, there are mounted an A/C (air conditioner) switch 27 which turns on or off a compressor of the air cooling system, a fan switch 28 which selects the speed modes of the fan 8, an OFF switch 29 which turns off the entire of the air conditioning system, an AUTO switch 30 which turns on the entire of the air conditioning system and brings the system to an automatic (AUTO) mode, a mode switch 31 which selects the air blowing modes, temperature control switches 32a and 32b which set a desired temperature of air blown to the passenger room, a REC (Recirculation) switch 33 which, when pushed on, induces an internal air recirculation mode, and a DEF (Defroster) switch 34 which, when pushed on, induces the defroster mode. The display devices are a display device 35 for indicating the fan speed and the set temperature, and a display device 36 for indicating a selected one of the air blowing modes. The REC switch 33 and the DEF switch 34 have each an electric lamp.

It is to be noted that the result of the after-mentioned self-diagnosis is displayed on the display device 35.

The control panel 26 and the control unit 22 are connected to constitute a controller means. To the controller means, there is connected a battery (not shown). That is, power supply to each actuator 18a, 18b or 18c is carried out from the battery through the control unit 22 and the power wire 23.

Although not shown in the drawings, to the control unit 22, there are connected various sensors which are, for example, an internal air temperature sensor which detects the temperature of air in the passenger room, an external air temperature sensor which detects the temperature of the outside air and a solar radiation quantity sensor which detects the quantity of solar radiation. Processing the information signals from the sensors and the switches 27 to 34, the control unit 22 issues instruction signals to the actuators 18a, 18b and 18c through the single communication wire 24. Upon receiving the instruction signals which represent target angular positions of the doors, each actuator 18a, 18b or 18c drives the electric motor 19 in a manner to bring the current door position to the target position, while monitoring the output (which represents the current door position) of the PBR 20.

In addition to the above-mentioned automatic air conditioning functions, the air conditioning system of the present invention has a self-diagnosable function which automatically carries out diagnosis of the control doors 7, 11, 15 to 17. Switching from "AUTO AIR CONDITIONING CONTROL MODE" to "SELF-DIAGNOSIS MODE" and vise versa are carried out through given operations. A self-diagnosis program is used for readily finding out the door which fails to operate. The program comprises a plurality of self-diagnosis steps, which are, for example, STEP-A for checking the segments of the display devices and/or indicating lamps (viz., LED or the like), STEP-B for checking the data (for example, breaking of wire, short cut or the like) of the actuators and indicating the result, STEP-C for driving the actuators, checking the door positions and indicating the result, and STEP-D for driving various output devices and checking the operation of the same.

In the present invention, by using the POS signals (viz., target position accomplishment representing signal) issued from the actuators. 18a, 18b and 18c, the diagnosis of the STEP-C is carried out. This is unique when considering that in the conventional system, door position representing signals issued from the actuators have not been practically used.

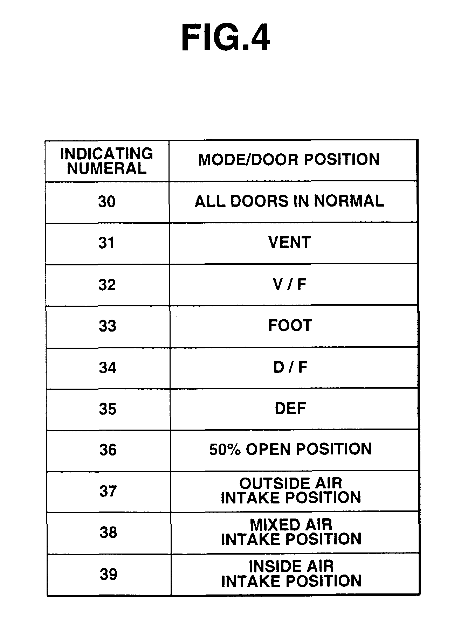

In the self-diagnosis of STEP-C, the three actuators 18a, 18b and 18c are subjected to a diagnosis. Due to the function of the control unit 22, the actuators 18a, 18b and 18c are operated to drive the corresponding doors to desired angular positions. The POS signals thus produced by the actuators are checked by the control unit 22 and the result of the checking is displayed on the display device 35 by terms of indicating numerals for example, "30" to "39" as shown in the table of Fig. 4.

That is, as is shown in Fig. 4, the indicating numeral "30" indicates that all doors are in a normal condition, the indicating numerals "31" to "35" indicate respectively that the mode doors 15, 16 and 17 actuated by the actuator 18c fail to properly set the "VENT", "V/F", "FOOT", "D/F" and "DEF" modes, the indicating numeral "36" indicates that the air mix door 11 actuated by the actuator 18b fails to take the 50% OPEN POSITION and the indicating numerals "37" to "39" indicate respectively that the intake door 7 actuated by the actuator 18a fails to properly set the "OUTSIDE AIR INTAKE POSITION", "MIXED AIR INTAKE POSITION" and "INSIDE AIR INTAKE POSITION".

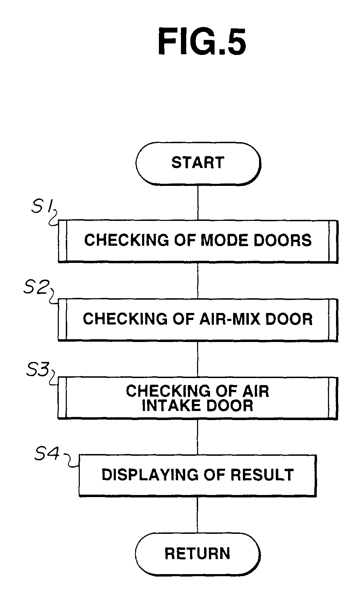

In Fig. 5, there is shown a flowchart which shows first, second, third and fourth general operation steps S1, S2, S3 and S4 which are executed in the control unit 22 for carrying out the STEP-C of the self-diagnosis.

When execution of the self-diagnosis program of the above-mentioned STEP-C is started, the control unit 22 checks, at step-S1, the "VENT", "V/F", "FOOT", "D/F" and "DEF" modes provided by the mode doors 15, 16 and 17 actuated by the actuator 18c, then checks at step-S2, the 50% OPEN POSITION of the air mix door 11 actuated by the actuator 18b and then checks, at step-S3, the "OUTSIDE AIR INTAKE POSITION", "MIXED AIR INTAKE POSITION" and "INSIDE AIR INTAKE POSITION" of the intake door 7 actuated by the actuator 18a, in order. When the operations of the step-S1, step-S2 and step-S3 are finshed, the result of the checking is displayed on the display device 35 by using one, or some of the indicating numerals "30" to "39" (step-S4). That is, if the checking finds that some of the modes or door positions fail to take their proper modes or positions, the corresponding indicating numerals are displayed on the display device 35 one after another. Displaying of the result on the display device 35 is carried out with reference to various data memorized in a given memory.

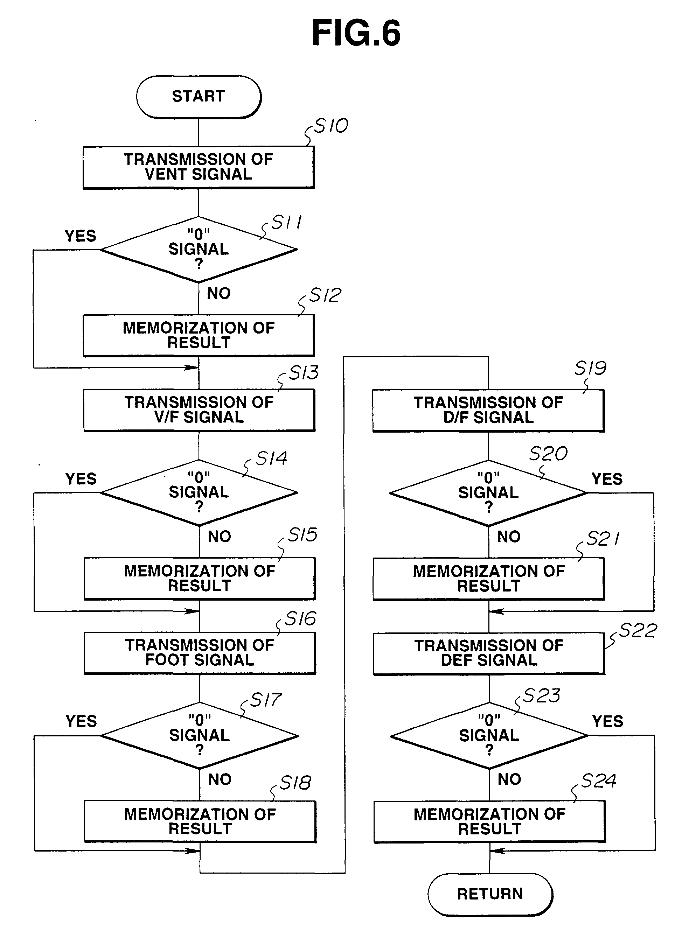

In Fig. 6, there is shown a flowchart which shows in detail the programmed operation steps for checking the positions or diagnosing the operation of the mode doors 15, 16 and 17, that is, the various modes provided by these doors.

At step-S10, from the control unit 22 to the actuator 18c, there is transmitted through the single communication wire 24 a VENT signal which represents proper positions of the mode doors 15, 16 and 17 for the VENT mode. Upon this, the actuator 18c, while monitoring the output of the PBR 20, drives the electric motor 19 to move the doors 15, 16 and 17, and issues "0" or "1" signal (viz., POS signal) to the control unit 22. That is, at step-S11, in the control unit 22, a judgment is carried out as to whether "0" signal representing that the doors 15, 16 and 17 have been all set to the proper positions for the VENT mode is received or not. If YES, the operation flow goes to step-S13. While, if NO, the operation flow goes to step-S12 where information on the abnormal VENT mode is memorized.

At step-S13, from the control unit 22 to the actuator 18c, there is transmitted through the communication wire 24 a V/F signal which represents proper positions of the mode doors 15, 16 and 17 for the V/F mode. Upon this, the actuator 18c, while monitoring the output of the PBR 20, drives the electric motor 19 to move the doors 15, 16 and 17, and issues "0" or "1" signal to the control unit 22. That is, at step-S14, in the control unit 22, a judgment is carried out as to whether "0" signal representing that the doors 15, 16 and 17 have been all set to the proper positions for the V/F mode is received or not. If YES, the operation flow goes to step-S16. While, if NO, the operation flow goes to step-S15 where information on the abnormal V/F mode is memorized.

At step-S16, from the control unit 22 to the actuator 18c, there is transmitted through the communication wire 24 a FOOT signal which represents proper positions of the mode doors 15, 16 and 17 for the FOOT mode-. Upon this, the actuator 18c, while monitoring the output of the PBR 20, drives the electric motor 19 to move the doors 15, 16 and 17, and issues "0" or "1" signal to the control unit 22. -That is, at step-S17, in the control unit 22, a judgment is carried out as to whether "0" signal representing that the doors 15, 16 and 17 have been all set to the proper positions for the FOOT mode is received or not. If YES, the operation flow goes to step-S19. While, if NO, the operation flow goes to step-S18 where information on the abnormal FOOT mode is memorized.

At step-S19, from the control unit 22 to the actuator 18c, there is transmitted through the communication wire 24 a D/F signal which represents proper positions of the mode doors 15, 16-and 17 for the D/F mode. Upon this, the actuator 18c, while monitoring the output of the PBR 20, drives the electric motor 19 to move the doors 15, 16 and 17, and issues "0" or "1" signal to the control unit 22. That is, at step-S20, in the control unit 22, a judgment is carried out as to whether "0" signal representing that the doors 15, 16 and 17 have been all set to the proper positions for the D/F mode is received or not. If YES, the operation flow goes to step-S22. While, if NO, the operation flow goes to step-S21 where information on the abnormal D/F mode is memorized.

At step-S22, from the control unit 22 to the actuator 18c, there is transmitted through the communication wire 24 a DEF signal which represents proper positions of the mode doors 15, 16 and 17 for the DEF mode. Upon this, the actuator 18c, while monitoring the output of the PBR 20, drives the electric motor 19 to move the doors 15, 16 and 17, and issues "0" or "1" signal to the control unit 22. That is, at step-S23, in the control unit 22, a judgment is carried out as to whether "0" signal representing that the doors 15, 16 and 17 have been all set to the proper positions for the DEF mode is received or not. If YES, the operation flow goes back to START position of this program. While, if NO, the operation flow goes to step-S24 where information on the abnormal DEF mode is memorized.

Memorized information at step-S12, step-S15, step-S18, step-S21 and/or step-S24 is displayed on the display device 35 (see Fig. 3) by terms of the indicating numeral "31", "32", "33", "34" or "35" (see Fig. 4) one after another if any.

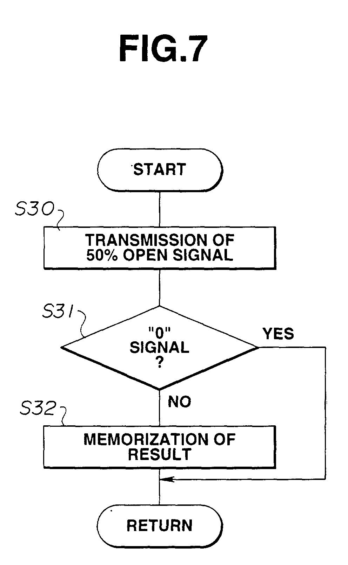

In Fig. 7, there is shown a flowchart which shows in detail the programmed operation steps for checking the position or diagnosing the operation of the air mix door 11, that is, the 50% OPEN POSITION of the air mix door 11.

At step-S30, from the control unit 22 to the actuator 18b, there is transmitted through the single communication wire 24 a "50% OPEN POSITION" signal which represents a proper position of the air mix door 11 for the 50% OPEN POSITION. Upon this, the actuator 18b, while monitoring the output of the PBR 20, drives the electric motor 19 to move the air mix door 11, and issues "0" or "1" signal (viz., POS signal) to the control unit 22. That is, at step-S31, in the control unit 22, a judgment is carried out as to whether "0" signal representing that the door 11 has been set to the proper position for the 50% OPEN POSITION is received or not. If YES, the operation flow-goes back to START position of this program. While, if NO, the operation flow goes to step-S32 where information on the abnormal 50% OPEN POSITION is memorized. The memorized information is displayed on the display device 35 (see Fig. 3) by terms of the indicating numeral "36".

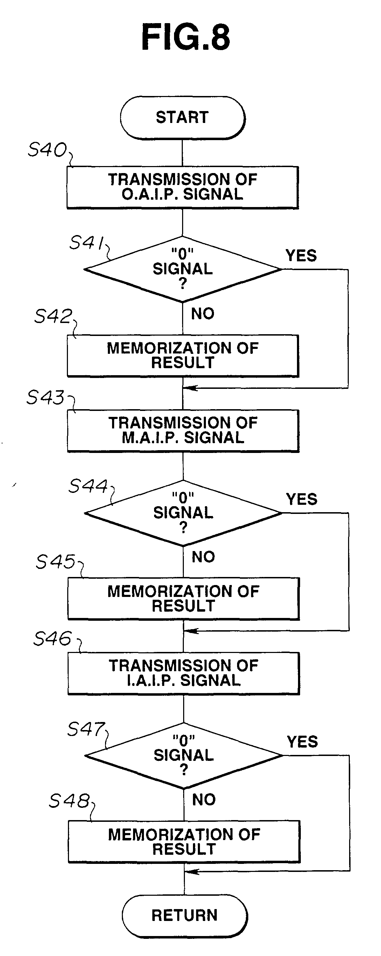

In Fig. 8, there is shown a flowchart which shows in detail the programmed operation steps for checking the various positions or diagnosing the operation of the air intake door 7.

At step-S40, from the control unit 22 to the actuator 18a, there is transmitted through the single communication wire 24 a "OUTSIDE AIR INTAKE POSITION" signal which represents a proper position of the air intake door 7 for the OUTSIDE AIR INTAKE POSITION. Upon this, the actuator 18a, while monitoring the output of the PBR 20, drives the electric motor 19 to move the air intake door 7, and issues "0" or "1" signal (viz., POS signal) to the control unit 22. That is, at step-S41, in the control unit 22, a judgment is carried out as to whether "0" signal representing that the air intake door 7 has been set to the proper position for the OUTSIDE AIR INTAKE POSITION is received or not. If YES, the operation flow goes to step-S43. While, if NO, the operation flow goes to step-S2 where information on the abnormal OUTSIDE AIR INTAKE POSITION is memorized.

At step-S43, from the control unit 22 to the actuator 18a, there is transmitted through the communication wire 24 a "MIXED AIR INTAKE POSITION" signal which represents a proper position of the air intake door 7 for the MIXED AIR INTAKE POSITION. Upon this, the actuator 18a, while monitoring the output of the PBR 20, drives the electric motor 19 to move the air intake door 7, and issues "0" or "1" signal to the control unit 22. That is, at step-S44, a judgment is carried out as to whether "0" signal representing that the air intake door 7 has been set to the proper position for the MIXED AIR INTAKE POSITION is received or not. If YES, the operation flow goes to step-S46. While, if NO, the operation flow goes to step-S45 where information on the abnormal MIXED AIR INTAKE POSITION is memorized.

At step-S46, from the control unit 22 to the actuator 18a, there is transmitted through the communication wire 24 an "INSIDE AIR INTAKE POSITION" signal which represents a proper position of the air intake door 7 for the INSIDE AIR INTAKE POSITION. Upon this, the actuator 18a, while monitoring the output of the PBR 20, drives the electric motor 19 to move the air intake door 7 and issues "0" or "1" signal to the control unit 22. That is, at step-S47, a judgment is carried out as to whether "0" signal representing that the air intake door 7 has been set to the proper position for the INSIDE AIR INTAKE POSITION is received or not. If YES, the operation flow goes to START position of this program. While, if NO, the operation flow goes to step-S48 where information on the abnormal INSIDE AIR INTAKE POSITION is memorized.

Memorized information at step-S42, step-S45 and/or step-S48 is displayed on the display device 35 (see Fig. 3) by terms of the indicating numeral "37", "38" or "39" (see Fig. 4) one after another if any.

If YES is answered throughout the step-S11, step-S14, step-S17, step-S20 and step-S23 of the program of Fig. 6, the step-S31 of the program of Fig. 7 and the step-S41, step-S44 and step-S47 of the program of fig. 8, the indicating numeral "30" is displayed on the display device 35, indicating that all doors 7, 11, 15, 16 and 17 are in a normal condition.

As has been described hereinabove, in the present invention, information signals (viz., POS signals) on the positions of the corresponding doors 7, 11, 16, 16 and 17 are provided by the actuators 18a, 18b and 18c and they are practically used for checking the positions of the these doors or diagnosing the operation of the doors. That is, in the invention, there is provided a self-diagnosable function by which the positions of the doors 7, 11, 15, 16 and 17 are automatically checked.

## Claims

1. An automotive air conditioning system comprising:
a heater /cooler unit (1) having therein a plurality of control doors (7, 11, 15, 16, 17) by which various air flow modes are provided;
a plurality of identical actuators (18a, 18b, 18c) respectively actuating said control doors (7; 11; 15, 16, 17), each actuator (18a, 18b, 18c) including an electric motor (19) that drives the corresponding control door (7; 11; 15, 16, 17), a position detector (20) that issues a current position signal representative of a current angular position assumed by the corresponding control door (7; 11; 15, 16, 17), and a control circuit (21a, 21b, 21c) that controls said electric motor (19) and thus the angular position of the corresponding control door with reference to both said current position signal and a target position signal applied thereto; and
a control unit (22) integrally controlling said actuators (18a, 18b, 18c) by means of a bi-directional serial transmission method, said control unit (22) issuing respective target position signals to said actuators (18a, 18b, 18c) one after another **characterized in that**
said control unit (22) thereafter judges whether the actuators (18a, 18b, 18c) issue or not respective target position failing signals each of which represents that the corresponding control door (7, 11, 15, 16, 17) has failed to be set to the target position and thereafter memorizing the results of the judgement when at least one target position failing signal is issued; and
a display device (35) is provided displaying the results memorized in said control unit (22) one after another.

2. An automotive conditioning system as claimed in claim 1, in which all of said actuators (18a, 18b, 18c) are connected to said control unit (22) by one communication wire (124) through which said bi-directional serial communication is carried out.

3. An automotive air conditioning system as claim in claim 2, in which a serial signal transmitted between said control unit (22) and each actuator (18a, 18b, 18c) includes a SOM part of 8/3 bits which represents starting of transmission, an ADR part of 3 bits which represents the address of each actuator, an ENA part of 1 bit which represents whether the corresponding electric motor should be run or not, a DATA part of 7 bits which represents various information for controlling the actuators, a PRTY part of 1 bit which represents odd parity for the ADR, ENA and DATA parts, and a POS part of 1 bit which represents whether the corresponding door (7; 11; 15, 16, 17) has assumed the target angular position not.

4. An automotive air conditioning system as claimed in claim 3, in which the SOM, ADR, ENA, DATA and PRTY parts carry information signals which are to be transmitted from said control unit (22) to each actuator (18a, 18b, 18c), and in which the POS part carries an information signal which is to be transmitted from each actuator (18a, 18b, 18c) to said control unit (22).

5. An automotive air conditioning system as claimed in one of claims 1 to 4 in which said control doors are classified into first, second and third groups, said first group including an air intake door (7) by which the rate between outside air intake amount and inside air intake amount is controlled, said second group including an air mix door (11) by which the rate between the amount of air which flows directly from an evaporator (9) to an air mix chamber and the amount of air which flows from said evaporator (9) to said air mix chamber through a heater core (10) is controlled, said third group including a plurality of mode doors (15, 16, 17) by which various modes are provided.

6. An automotive air conditioning system as claimed in claim 5, in which said actuators include first, second and third actuators (18a, 18b, 18c) which are incorporated with said first, second and third groups of control doors respectively.

7. An automotive air conditioning system as claimed in claim 1, in which said display device (35) displays the result of the target position judgment by terms of at least one indicating numeral.

8. An automotive air conditioning system as claimed in one of claims 1 to 7, in which the information possessed by said target position failing signal is represented by "1".

## Patentansprüche

1. Kraftfahrzeug-Klimaanlage, umfassend:
eine Heizungs-/Kühlungseinheit (1), die eine Mehrzahl von Steuerklappen (7, 11, 15, 16, 17) aufweist, durch welche verschiedene Luftströmungs-Betriebsarten geschaffen werden;
eine Mehrzahl von identischen Stellantrieben (18a, 18b, 18c), die jeweils die Steuerklappen (7; 11; 15, 16, 17) betätigen, wobei jeder Stellantrieb (18a, 18b, 18c) einen Elektromotor (19) einschließt, der die entsprechende Steuerklappe (7; 11; 15, 16, 17) antreibt, einen Positionsdetektor (20) einschließt, der ein laufendes Positionssignal abgibt, das eine laufende Winkelposition repräsentiert, die durch die entsprechende Steuerklappe (7; 11; 15, 16, 17) eingenommen wird, und eine Steuerschaltung (21a, 21b, 21c) einschließt, die den Elektromotor (19) und somit die Winkelposition der entsprechenden Steuerklappe unter Bezug auf sowohl das laufende Positionssignal als auch Zielpositionssignal, das daran angelegt wird, steuert; und
eine Steuereinheit (22), die integriert die Stellantriebe (18a, 18b, 18c) mittels eines Zweirichtungs-Übertragungsverfahrens steuert, wobei die Steuereinheit (22) jeweilige Zielpositionssignale an die Stellantriebe (18a, 18b, 18c) hintereinander abgibt, **dadurch gekennzeichnet,** dass
die Steuereinheit (22) danach entscheidet, ob die Stellantriebe (18a, 18b, 18c) jeweilige Zielpositions-Fehlersignale abgeben, von denen jedes repräsentiert, dass die entsprechende Steuerklappe (7, 11, 15, 16, 17) ausgefallen ist, auf die Zielposition gesetzt zu werden, und danach die Ergebnisse der Entscheidung speichert, wenn zumindest ein Zielpositions-Fehlersignal abgegeben ist; und
eine Anzeigevorrichtung (35) vorgesehen ist, die die Ergebnisse, die in der Steuereinheit (22) gespeichert sind, hintereinander anzeigt.

2. Kraftfahrzeug-Klimaanlage nach Anspruch 1, bei der alle Stellantriebe (18a, 18b, 18c) mit der Steuereinheit (22) mittels eines Kommunikationsdrahtes (124) verbunden ist, durch welchen das serielle Zweirichtungs-Übertragungsverfahrern ausgeführt wird.

3. Kraftfahrzeug-Klimaanlage nach Anspruch 2, bei welcher ein serielles Signal. das zwischen der Steuereinheit (22) und jedem Stellantrieb (18a, 18b, 18c) übertragen wird, einen SOM-Teil von 8/3 Bits einschließt, welcher das Starten der Übertragung repräsentiert, einen ADR-Teil von 3 Bits einschließt, welcher die Adresse jedes Stellantriebs repräsentiert, einen ENA-Teil von 1 Bit einschließt, welcher repräsentiert, ob der entsprechende Elektromotor laufen sollte oder nicht, einen DATA-Teil von 7 Bit einschließt, welcher verschiedene Informationen zum Steuem der Stellantriebe repräsentiert, einen PRTY-Teil von 1 Bit einschließt, welcher eine ungerade Parität für die ADR-, ENA- und DATA-Teile repräsentiert, und einen POS-Teil von 1 Bit einschließt, welcher repräsentiert, ob die entsprechende Klappe (7; 11; 15, 16, 17) die Zielwinkelposition eingenommen hat.

4. Kraftfahrzeug-Klimaanlage nach Anspruch 3, bei der die SOM-, ADR-, ENA-, DATA- und PRTY-Teile Informationssignale tragen, welche von der Steuereinheit (22) an jeden Stellantrieb (18a, 18b, 18c) übertragen werden, und in welcher der POS-Teil ein Informationssignal trägt, welches von jedem Stellantrieb (18a, 18b, 18c) zu der Steuereinheit (22) zu übertragen ist.

5. Kraftfahrzeug-Klimaanlage nach einem der Ansprüche 1 bis 4, wobei die Steuerklappen in erste, zweite und dritte Gruppen klassifiziert sind, wobei die erste Gruppe eine Lufteinlassklappe (7) einschließt, durch welche die Geschwindigkeit zwischen der Außenluft-Einlassmenge und der Innenluft-Einlassmenge gesteuert wird, wobei die zweite Gruppe eine Luftmischklappe (12) einschließt, durch welche die Geschwindigkeit zwischen der Menge der Luft, welche direkt von einem Verdampfer (9) zu der Luftmischkammer über einen Heizungswärmetauscher (10) strömt, gesteuert wird, und wobei die dritte Gruppe eine Mehrzahl von Betriebsarten-Klappen (15, 16, 17) einschließt, durch welche die verschiedenen Betriebsarten vorgesehen sind.

6. Kraftfahrzeug-Klimaanlage nach Anspruch 5, wobei die Stellantriebe erste, zweite und dritte Stellantriebe (18a, 18b, 18c) einschließen, welche jeweils in der ersten, zweiten und dritten Gruppe der Steuerklappen beinhaltet sind.

7. Kraftfahrzeug-Klimaanlage nach Anspruch 1, bei der die Anzeigevorrichtung (35) das Ergebnis der Zielpositionsentscheidung in Form von mindestens einer Anzeigezahl anzeigt.

8. Kraftfahrzeug-Klimaanlage nach einem der Ansprüche 1 bis 7, bei der die Information, die das Zielpositions-Fehlersignal innehat, durch Eins repräsentiert wird.

## Revendications

1. Un système de conditionnement d'air pour automobiles comprenant:
une unité de chauffage/refroidissement (1) comportant à l'intérieur une pluralité de clapets de commande (7, 11, 15, 16, 17) par lesquels sont assurés divers modes d'écoulement d'air;
une pluralité d'actionneurs identiques (18a, 18b, 18c) actionnant respectivement lesdits clapets de commande (7; 11; 15, 16, 17), chaque actionneur (18a, 18b, 18c) comprenant un moteur électrique (19) qui entraîne le clapet de commande correspondant (7; 11; 15, 16, 17), un détecteur de position (20) qui émet un signal de position actuelle représentatif d'une position angulaire actuelle prise par le clapet de commande correspondant (7; 11; 15, 16, 17); et un circuit de commande (21a, 21b, 21c) qui commande ledit moteur électrique (19) et ainsi la position angulaire du clapet de commande correspondant en référence à la fois audit signal de position actuelle et à un signal de position recherchée appliquée à celui-ci; et
une unité de commande (22) commandant ensemble lesdits actionneurs (18a, 18b et 18c) au moyen d'un procédé de transmission série bidirectionnelle, ladite unité de commande (22) émettant des signaux de position recherchée respectifs vers lesdits actionneurs (18a, 18b, 18c) l'un après l'autre **caractérisé en ce que**
ladite unité de commande (22) juge ensuite si les actionneurs (18a, 18b et 18c) émettent ou non des signaux de défaut de position recherchée respectifs dont chacun représente que le clapet de commande correspondant (7, 11, 15, 16, 17) n'a pas été réglé à la position recherchée et mémorisant ensuite les résultats du jugement lorsqu'est émis au moins un signal de défaut de position recherchée; et
un dispositif d'affichage (35) est prévu pour afficher, l'un après l'autre, les résultats mémorisés dans ladite unité de commande (22).

2. Un système de conditionnement d'air pour automobiles tel que revendiqué à la revendication 1, dans lequel tous lesdits actionneurs (18a, 18b, 18c) sont reliés à ladite unité de commande (22) par un câble de communication (24) à travers lequel est transportée ladite communication série bidirectionnelle.

3. Un système de conditionnement d'air pour automobiles tel que revendiqué à la revendication 2, dans lequel un signal série transmis entre ladite unité de commande (22) et chaque actionneur (18a, 18b et 18c) comprend une partie DDM de 8/3 bits qui représente le début de transmission, une partie ADR de 3 bits qui représente l'adresse de chaque actionneur, une partie VAL de 1 bit qui représente si le moteur électrique correspondant doit être amené à tourner ou non, une partie DONNÉES de 7 bits qui représente diverses informations pour commander les actionneurs, une partie PRTÉ de 1 bit qui représente la parité impair pour les parties ADR, VAL et DONNÉES, et une partie POS de 1 bit qui représente si le clapet correspondant (7; 11; 15, 16, 17) a pris la position angulaire recherchée ou non.

4. Un système de conditionnement d'air pour automobiles tel que revendiqué à la revendication 3, dans lequel les parties DDM, ADR, VAL, DONNÉES et PRTÉ portent des signaux d'information qui doivent être transmis depuis ladite unité de commande (22) jusqu'à chaque actionneur (18a, 18b, 18c), et dans lequel la partie POS porte un signal d'information qui doit être transmis depuis chaque actionneur (18a, 18b, 18c) vers ladite unité de commande (22).

5. Un système de conditionnement d'air pour automobiles tel que revendiqué dans une des revendications 1 à 4 dans lequel lesdits clapets de commande sont classés en premier, second et troisième groupes, ledit premier groupe comprenant un clapet d'admission d'air (7) par lequel est commandé le rapport entre la quantité d'admission d'air extérieur et la quantité d'admission d'air intérieur, ledit second groupe comprenant un clapet de mélange d'air (11) par lequel est commandé le rapport entre la quantité d'air qui s'écoule directement depuis un évaporateur (9) jusqu'à une chambre de mélange d'air et la quantité d'air qui s'écoule depuis ledit évaporateur (9) jusqu'à ladite chambre de mélange d'air par l'intermédiaire d'un noyau de chauffage (10), ledit troisième groupe comprenant une pluralité de clapets de mode (15, 16, 17) par lesquels sont fournis divers modes.

6. Un système de conditionnement d'air pour automobiles tel que revendiqué à la revendication 5, dans lequel lesdits actionneurs comprennent de premier, second et troisième actionneurs (18a, 18b et 18c) qui sont respectivement incorporés avec lesdits premier, second et troisième groupes de clapets de commande.

7. Un système de conditionnement d'air pour automobiles tel que revendiqué à la revendication 1, dans lequel ledit dispositif d'affichage (35) affiche le résultat du jugement de position recherché en termes d'au moins un numéro indicateur.

8. Un système de conditionnement d'air pour automobiles tel que revendiqué dans une des revendications 1 à 7, dans lequel l'information possédée par ledit signal de défaut de position recherchée est représenté par "1".
